# EUROPEAN PATENT SPECIFICATION

(11) **EP 2 892 350 B1**
(45) Date of publication and mention of the grant of the patent: **21.03.2018**
(21) Application number: 13774224.3
(22) Date of filing: 04.09.2013
(51) Int. Cl.: A01N 59/16, A01N 59/26, A01P 9/00, A01N 59/02, A01N 25/28

(54) **ENCAPSULATED BIOAVAILABLE AND PESTICIDAL IRON FORMULATIONS**
VERKAPSELTE BIOVERFÜGBARE UND PESTIZIDE EISENFORMULIERUNGEN
FORMULATIONS DE FER BIODISPONIBLES ET PESTICIDES ENCAPSULÉES

(30) Priority: 04.09.2012 GB 201215792
(43) Date of publication of application: 15.07.2015
(73) Proprietor: Ingwermat Limited, Ilkley, West Yorkshire LS29 7QG (GB)
(72) Inventor: WHITELEY, Dr. Geoffrey, Ilkley West Yorkshire LS29 7QG (GB)
(74) Representative: Browne, Robin Forsythe
(86) International application number: PCT/GB2013/052317
(87) International publication number: WO 2014/037718

(56) References cited:
- WO-A2-2011/000709
- US-A- 3 937 798
- EDWARDS C A ET AL: "The relative toxicity of metaldehyde and iron phosphate-based molluscicides to earthworms", CROP PROTECTION, ELSEVIER SCIENCE, GB, vol. 28, no. 4, 1 April 2009 (2009-04-01), pages 289-294, XP025950249, ISSN: 0261-2194, DOI: 10.1016/J.CROPRO.2008.11.009 [retrieved on 2009-02-20] cited in the application

## Description

The present invention relates to encapsulated water soluble formulations of iron and phosphate which can be used as either a molluscicide or a mollusc deterrent in the absence of an added metal complexing or chelating agent.

EP1679002A outlines how metal chelates are used as control agents for molluscs (slugs and snails). This description cites the example of U.S. Pat. No. 5,437,870 (Puritch et al.) which discloses an ingestible molluscicide having a carrier (e.g., a bait), a simple iron compound, and ethylene diamine tetracetic acid (EDTA), salts of EDTA, hydroxyethlene triamine diacetic acid, (HEDTA) or salts of HEDTA. U.S. Patent No. 6,352,706 of Puritch also discloses an ingestible molluscicide containing a simple metal compound, an activity enhancing additive such as ethylene diamine disuccinic acid (EDDS) and derivatives thereof, and a carrier material edible to molluscs. Australian Patent Application No. 77420/98 of Young also discloses a stomach-action molluscicide that includes a metal complex iron EDTA and a carrier.

Parker (European Patent EP1679002A) lists suitable organic chelating agents for use in combination with a simple metal salt and ingestible bait to include: aconitic acid, alanine diacetic acid (ADA), alkoyl ethylene diamine triacetic acids (e.g., lauroyl ethylene diamine triacetic acids (LED3A)), aminotri(methylenephosphonic acid) (ATMP), asparticaciddiacetic acid (ASDA), asparticacidmonoacetic acid, diamino cyclohexane tetraacetic acid (CDTA), citraconic acid, citric acid, 1,2-diaminopropanetetraacetic acid (DPTA-OH), 1,3-diamino-2-propanoltetraacetic acid (DTPA), diethanolamine, diethanol glycine (DEG), diethylenetriaminepentaacetie acid (DTPA), diglycolic acid, dipicolinic acid (DPA), ethanolaminediacetic acid, ethanoldiglycine (EDG), ethionine, ethylenediamine (EDA), cthylenediaminediglutaric acid (EDDG), ethylenediaminedi(hydroxyphenylacetic acid (EDDHA), ethylenediaminedipropionic acid (EDDP), ethylenediaminedisuccinate (EDDS), ethylenediaminemonosuccinic acid (EDMS), ethylenediaminetetraacetic acid (EDTA), ethyleneglycolaminoethylestertetraacetic acid (EGTA), gallic acid, glucoheptonic acid, glutamicaciddiacetic acid (GLDA), glutaric acid, gluconic acid, glyceryliminodiacetic acid, glycinamidedisuccinic acid (GADS), glycoletherdiaminetetraacetic acid (GEDTA), 2-hydroxyethyldiacetic acid, hydroxyethylenediaminetriacetic acid (HEDTA), hydroxyethyldiphosphonic acid (HEDP), hydroxyiminodiacetic acid (HIDA), iminodiacetic acid (IDA), iminodisuccinic acid (IDS), itaconic acid, lauroyl ethylene diamine triacetic acids (LED3A), methylglycinediacetate (MGDA), methyliminodiacetic acid (MIDA), monoethanolamine, nitrilotriacetic acid (NTA), nitrilotripropionic acid (NPA), saccharates, salicylic acid, serinediacetic acid (SDA), sorbic acid, succinic acid, tartaric acid, tartronic acid, triethanolamine, triethylenetetraamine, and combinations thereof. Parker considered that preferably, the chelating agent is an ambiopolycarboxylic acid, an amine, an amide, a carboxylic acid, a phosphonic acid and combinations thereof. More preferably, the chelating agent is EDTA, HEDTA, EDDS, HEDP, DTPA and combinations thereof. Other suitable chelating agents listed as being capable of complexing metal ions include, amino acids, such as aspartic acid, glutamic acid, and lysine, as well as proteins, such as whey powder, casein, and albumen. Wirth et al. (WO2012045682) describe a formulation for snail baits comprising organophosphonic acids, metal salts and methiocarb.

Taking into account the extensive teaching and practice of the art of iron phosphate molluscicides cited above, it is notable that an organic complexing agent is considered in the field to be an essential component for efficacy or at least for high potency of iron based molluscicides. The organic chelating agent is considered, in each case cited, necessary to enhance the bioavailability of iron because it is proposed that iron phosphate salts are, as commonly described, 'practically insoluble' in water. Iron (III) phosphate dihydrate FePO₄.2H₂O is typically quoted as having a solubility product of 9.91×10⁻¹⁶ in water at pH 7 and ferric phosphate is quoted as having a solubility in water at pH 7 and 25 °C of 1.86 x 10⁻¹² g/l. The ability to formulate, maintain and deliver substantially elevated concentrations of bioavailable iron in the absence of any of the complexing agents listed above simply by formulating the iron salt in liquid form as a mildly acidified aqueous solution with a pH between 3.0 or less but also up to 6.5 is not obvious and indeed runs counter to the direction of current art in the field of iron phosphate molluscicides.

Although molluscs, including slugs and snails, are important pests not many chemicals have been marketed as molluscicides. The most commonly used include: metaldehyde (first introduced in 1936) and some carbamates such as methiocarb and more recently since the 1990s, iron phosphate plus chelating agents (Edwards et al., Crop Protection 28 (2009) 289-294). There is interest in developing new molluscicides that are safer with respect to use in the environment, to users and handlers of the products in manufacture storage, transport, use and disposal. Edwards *et al.* and others have presented evidence that molluscicides containing iron phosphate and EDTA or EDDS chelating agents may present environmental hazards to earthworms, domestic animals and humans and it is likely that such concerns will become the subject of further examination. For example, ferric phosphate was petitioned for removal from the US National List 205.601(h) of the National Organic Standards Board (Report of the Crops Subcommittee, Petitioned Material Proposal, Ferric Phosphate (to Remove), August 15, 2012). The reason given for the petition being that ferric phosphate cannot be used as an effective molluscide without EDTA, which might therefore be considered an active ingredient rather than an inert ingredient. Delivery of iron as an organic ligand-free liquid formulation of inorganic iron phosphate according to the present invention would therefore be of interest to the industry, and particularly to certain user groups, as an alternative molluscicide which is capable of delivering an effective amount of iron to the absorbing surfaces of the gut epithelia of terrestrial molluscs that does not require EDTA, EDDS or other organic chelating agents to be added to the bait.

US 3937798 discloses a method of controlling hydrogen ion concentration of an aqueous solution by use of microcapsules to maintain a constant hydrogen ion concentration regardless of the variation in the composition of the solution. More particularly, the invention relates to a method of controlling a hydrogen ion concentration of an aqueous solution by use of microcapsules prepared by encapsulating an acid material with a so-called alkalisoluble polymer, i.e., a polymer soluble in water in only an alkaline state, or microcapsules prepared by encapsulating an alkaline material with a so-called acid-soluble polymer, i.e., a polymer soluble in water in only an acid state.

Edwards C. A. Et al. "The relative toxicity of metaldehyde and iron phosphate-based molluscicides to earthworms", Crop Protection vol. 28 (2009) pages 289-294 discloses studies comparing the effects of metaldehyde and iron phosphate alone, with those of iron phosphate plus chelating agents EDDS and EDTA, and of the chelating agents alone on earthworms.

WO 2011/000709 discloses the use of pymetrozine for the control of gastropods. In particular, methods of protecting plants and plant propagation material thereof against damage by gastropods by use of pymetrozine are disclosed.

According to the present invention, a pesticidal composition comprises a microcapsule comprising a shell and a fill, the fill comprising water and the dissolved reaction product of ferrous sulphate with phosphoric acid followed by addition of an oxidising agent;
wherein the microcapsule shell is coated with an ingestible material.

The composition may comprise one or more microcapsules incorporated within a body of carrier material, for example, in the form of a pellet. Typically a pellet contains from 10 to 900 microcapsules, for example, 50 to 500 microcapsules present in a pellet. Each microcapsule may have a diameter of 10 to 100 microns. This may enable the slug to break up the pellet allowing the small capsules it contained to pass into the intestine as part of the dough where they break open or dissolve releasing the toxic iron solution.

For use as molluscicide, water soluble formulations of iron phosphate are encapsulated to form microcapsules and one or more microcapsules are incorporated in a carrier material edible to pests to provide a pellet of the pesticidal composition containing sufficient bioavailable iron to be effective to kill pests upon ingestion and release of the encapsulated contents. The present invention relates specifically to use of water soluble iron phosphate compositions where aqueous inorganic phosphate complexes of iron are the principal agent responsible for retaining iron bioavailability, thus circumventing the need to have an organic chelating agent present in the composition for efficacy as is taught in the current art for the formulation of iron phosphate molluscicides.

An outer coating, for example a film coating may be added to protect the pellet from moisture degradation and leeching.

The invention particularly relates to a molluscicidal composition, particularly for treatment of slugs or snails.

Preferred embodiments of the invention are free from chelating agents, especially EDTA.

The fill is preferably an aqueous solution wherein the pH is in the range pH 1-7.

Preferably the fill of each microcapsule or the aggregated contents of two or more microcapsules contained in a pellet comprises 10-50µg Fe in order to provide a lethal dose to a slug or snail ingesting the pellet.

The concentration of Fe in the fill is preferably 5 wt%, more preferably 0.3-1 wt %.

The weight of an uncoated microcapsule may be in the range 0.001g to 0.05g. Preferred capsule shells have a dimension of 5µm to 1000µm, preferably 5µm to 500µm, more preferably 50µm to 200µm, especially 100µm to 150µm.

The coating may be a farinaceous material. For example, suitable coatings may be selected from the group consisting of: starch, pectin, agar, gelatine, guar gum, gum arabinose, cellulose, polysaccharides (starches, vegetable gums), proteins, fecula.

Alternative carrier materials comprise: non-food carriers, for example: cellulose complexes, sand, clay, silica, polyacrylic acid polymers, polyacrylimide acid polymers, diatomaceous earth, aliginate and wax.

Preferred starches may be selected from the group consisting of: arrowroot, corn starch, katakuri starch, potato starch, sago, tapioca or modified and derivative starches. Vegetable gums, for example guar gum, locust bean gum and xanthan gum, may be used in the coating as a binder. Proteins may be used. These may be selected from collagen, egg white, furcellaran and gelatine. Carbohydrates including sugars may also be employed.

The following substances may be included in the coating materials to enhance palatability;
vitamin B, in particular BI, B2, nicotinic acid or nicotinamide;
vitamin E;
animal or vegetable proteinaceous material, albumins and their hydrolytic degradation products, pepsin, metaproteins, proteoses, peptones, polypeptides, peptides, diketopiperazines and amino acids;
amino acids or salts or amides thereof;
nucleic acid or a hydrolytic degradation products, nucleotides, nucleosides, adenine, guanine;
cytosine, uracil or thymine;
urea or carbamic acid;
an ammonium salt, for example ammonium acetate;
an amino sugar, for example glucosamine or galactosamine.

Phagostimulants may be used to enhance ingestion and attraction.

Preservatives, tast-altering additives, water-proofing agents, antioxidants, suspending agents, UV stabilizers, odor masking agents and anti-microbial agents may also be employed.

Suitable preservatives may include Legend MK®, available from Rohn & Hass Company of Philadelphia, Pennsylvania and CA-24, available from Dr. Lehmann and Co. of Memmingen/Allgäu, Germany. Preservatives can be mixed with water to form a stock solution to be added to the formulation at a concentration in the range of about 10-750 ppm.

Waterproofing agents, which can also act as binders, can be added to the composition to improve the weatherability of the composition. These are typically water insoluble compounds such as waxy materials and other hydrocarbons. Examples of suitable waterproofing agents include paraffin wax, stearate salts, beeswax and similar compounds.

The capsule shell may be composed of any of the materials commonly used for formation of microcapsules.

The microcapsules may be made by physical methods, physic-chemical methods or by chemical methods known to those skilled in the art. Physical methods include centrifugal extrusion or core-shell encapsulation using a vibrational nozzle. Chemical methods may include interfacial polycondensation.

Preferred shell materials include beeswax, starch, gelatin, polyacrylic acid, polyphosphate, alginate, chitosan, carrageenan, starch, modified starch, oligofructans, konnyaku, alpha- lactalbumin, beta-lactoglobumin, ovalbumin, polysorbiton, maltodextrin, cyclodextrin, cellulose, cellulose ether, methyl cellulose, ethyl cellulose, hydropropylmethylcellulose, carboxymethylcellulose, hydroxypropyl cellulose, milk protein, canola protein, albumin, chitin, polylactides, poly-lactide-co- glycolides, derivatized chitin, poly-lysine, dilutan gum, locus bean gum, welan gum, xanthan gum zyme, a flavor, a nutrient, a drug, etc.

The size of the capsules can be adjusted between less than 0.1 micron to greater than 1000 microns to get 10-5- droplets into a 1 mm diameter by 2 mm length average pellet.

The fill may be prepared by mixture of a ferrous salt, for example, ferrous sulphate, with phosphoric acid followed by addition of an oxidising agent. Hydrogen peroxide is preferred. Equimolar amounts of ferrous salt and phosphoric acid may be employed. An equimolar amount or stoichiometric excess of oxidising agent may be used to ensure complete conversion to the ferric species.

The fill may be prepared by mixing a near saturated aqueous solution of ferrous sulphate (food grade ferrous sulphate heptahydrate) and 75% phosphoric acid (food grade) and then diluting these mixtures to a range of dilutions between 1:1 and 1:50 with deionised water. In most cases mixing of these ingredients and dilution leads to a spontaneous precipitation of iron phosphates but when slow and non-turbulent dilution is employed, it has been found possible to mix and dilute without any such precipitation taking place. Such stock solutions remain stable for prolonged periods without the precipitation of iron phosphates from solution even when open to atmospheric oxygen and sunlight. Gradual and non-turbulent dilution and a stock solution down to a concentration as low as 10 grams per litre of Fe and to a pH of up to 5.5 has been able to retain stable clear solutions for periods extending from one day to fifty weeks or more at ambient temperature. This was depending on the actual pH, solution composition and environment without iron precipitating as either amorphous iron hydroxide or iron phosphate salt. During such periods the total concentration of Fe in solutions may remain higher, as evidenced by lack of precipitation of iron phosphate salts than those obtained when dissolving powdered crystalline iron phosphate in water adjusted to the same pH with dilute sulphuric acid. Supersaturated solutions may be obtained. For turbulent mixing in a tank, spontaneous precipitation of iron phosphates most commonly occurred before the pH had risen to 2.5 to 3.0 on dilution of the ferrous sulphate and phosphoric acid mixture.

The capability of using a simple liquid formulation of iron salts with inorganic phosphate that is stable in solution for prolonged periods of time at biologically effective solution concentrations (i.e. multiple orders or magnitude above equivalent published limit of 1.86 x 10⁻¹² g/l for ferric phosphate in water at pH 7) offers up opportunities for delivering bioavailable iron to produce a biological effect. Liquid formulations can be deployed using well established liquid encapsulation technology. This use is contrary to the established teaching in the field that for iron phosphate to be formulated for use in molluscicides it should be incorporated in the form of a powdered solid accompanied by a chelating agent to render it more soluble and bioavailable on ingestion. Providing the bioavailability is sufficient for efficacy the time-limited nature of bioavailability according to the present invention has advantages for the environmental safety and avoidance of off target toxicity in the intended uses of the current patent, and for the manufacture and marketing of iron based molluscicides and mollusc deterrents that do not contain chelating agents.

Without being bound by theory it is the view of the inventor that method of preparation of a concentrated acidic stock solution for subsequent dilution favours the formation ionic species (in the presence of SO₄²⁻, H₂PO₄⁻, HPO₄²⁻, PO₄³⁻) where the phosphate groups act as chelating ligand providers in the hydrated coordination shell of Fe II and Fe III ions which persist dynamically (i.e. transformations between ionic species exhibit variable asymmetric reaction rate constants) through the observed dilution delivery environments (Al-Sogair et al, J. Coord. Chem., 2002, Vol. 55(9), pp. 1097-1109). Speciation of iron in water greatly determines behaviour.

For the present invention it is possible to prepare acidified solutions containing ferrous iron, ferric ion and combinations thereof that exhibit toxicity or severe irritation on contact with molluscs. Ferric iron is the preferred form because soluble formulations have been found through trials to be more stable in the outdoor environment where the products are to be used. Moreover, ferric phosphate is the regulatory approved active agent for use as a mollusicide on crops in the EU (EUROPEAN COMMISSION HEALTH & CONSUMER PROTECTION DIRECTORATE-GENERAL Directorate E - Food Safety: E1 - Plant health; Ferric phosphate, SANCO/3035/99-final, 8 March 2002. *Review report for the active substance ferric phosphate, Standing Committee on Plant Health, 29 June 2001 in view of the inclusion of ferric phosphate in Annex I of Directive 91*/*414*/*EEC*) and in the USA where ferric phosphate is generally recognized as safe (GRAS) by the Food & Drug Administration. A further limitation of using ferrous iron as the delivery agent in a liquid formulation molluscicide is that Fe II has a tendency to autooxidise in oxygen rich environments forming Fe III aqueous complexes that polymerise and precipitate out of solution as amorphous hydrated iron oxides that are even less soluble than iron phosphate. This was observed in trials where during oxygenation the clear green ferrous iron solution became cloudy with a characteristic brown precipitate over time, with corresponding reduction in bioavailability and potency. Once formed amorphous hydrated iron oxides act to remove phosphate ions from solution. Incorporation of phosphate in a formulation as described herein does not prevent auotooxidation of iron II to iron III aqueous species in oxygenated environments (as observed by a transition from a pale green to a clear red/pink coloured solution) but it does prevent polymerisation and precipitation since the iron III complexes formed remain stable in solution and reversibly soluble during evaporation and rewetting cycles of test solutions

The present invention may provide a bioavailable iron composition and method for the control of terrestrial mollusc pests including mollusc species prevalent in agriculture, horticulture and forestry. The active component is preferably a solution containing soluble iron phosphate in a mineral acid solution, such as but not limited to sulphuric and phosphoric acid or combinations thereof and subsequently prepared mixtures of these with compatible ions and pH modifying agents. The composition may have an Fe content between 0.001% and 6% depending on the application. The composition is preferably used as an active agent in an ingestible poison effective to kill molluscs and as contact irritant to deter the passage of molluscs over surfaces to which it has been applied or absorbed.

A relatively concentrated liquid composition of iron phosphate in a dilute mineral acid solution of sulphuric and phosphoric acid which may additionally be buffered as necessary to modify the pH within the range from pH 1 up to pH7 and more preferably between pH 3.0 and 6.5 using any compatible alkaline agent such as potassium hydroxide which does not induce spontaneous precipitation, where this liquid composition displays long term stability and is suitable for use in manufacture of micro encapsulated products so that it can be added in encapsulated form to the ingestible carrier material as required to deliver an effective amount of iron for use as a mollusc poison this being preferably between 0.05% and 1% Fe content in the prepared bait by weight and more preferably between 0.1 and 0.4% of Fe by weight to form a pesticidal composition that is effective to kill pests upon ingestion. Encapsulation protects the enclosed liquid formulation from desiccation or leakage of contents in the outdoor environment and masks detection on ingestion of bait, allowing the contents to be released on mechanical action and or enzymatic dissolution of the wall material in the gut. Methods are in widespread use for encapsulating acids such as citric acid in foods for many applications including for example creating an acidic burst of flavour on release.

The matrix of the capsule may be chosen from a wide variety of materials classified as GRAS and susceptible to mechanical breakdown, chemical breakdown or enzymatic disintegration in the mollusc gut. Acidic solutions according to the present invention can be encapsulated by methods comprising but not limited to the following methods:
Solid lipid nanoparticles in which a heated acid solution is formed into stable, concentrated aqueous dispersions with a molten lipid that is solid at ambient temperatures. Particle size and distribution may be controlled by the rate of initial mixing, degree of shear and rate of cooling to produce a homogeneous mixture of matrix and acid solution which can be present at a concentration as high as 30% by weight of the total dispersion.

Co-extrusion of the molten or liquid shell material over droplets of the acidified iron solution or absorbent nano particles to which the acid solution has been added to form a solid core material, or spray-coating the shell over a solid particle using a fluidised beds to form a uniform coating of cores by shell forming solutions. The Wurster Process is commonly employed whereby particles are fluidised in an air stream within a vertical chamber and coating material solution is injected from below into the fluidized particles.

Standard chemical methods for microcapsule manufacture including coacervation, condensation or interfacial polymerization after dispersing the acidic iron core material in a non-solvent continuous phase to form an emulsion or dispersion (the continuous phase must be a non-solvent for the dispersed phase). The shell is then formed by a chemical reaction, and subsequent precipitation, of one or more shell-precursor materials that are dissolved in the continuous or discontinuous phase at the interface of the core material and the continuous phase.

Percentages and other amounts referred to in this specification are by weight unless indicated otherwise and are selected from any ranges quoted to total 100%.

The invention is further described by means of example, but not in any limitative sense.

### Preparation of Stock Solution

A bulk stock solution may be prepared according to the following method.

Deionised water was added to 45.7g FeSO₄.7H₂0 and made up to 100g to give a near saturated solution of ferrous sulphate having 25.0 g/100 g of FeSO₄ with an Fe content of 0.2 moles per 100g (9.2 g FE/100g) as a light green solution with a volume of 76.9 ml and a density of approximately 1.3. Once all the iron sulphate had dissolved, 26.1 g (15.5 ml) of 75% phosphoric acid H₃PO₄ was added, this being equivalent to 19.6 g (0.2 moles) of anhydrous H₃PO₄. Following this, 68g of 10% hydrogen peroxide was added gradually to prevent excessive heating and oxygen release on oxidation of ferrous to ferric iron, equivalent to 0.2 moles of H2O2, to yield 160.4 ml of a characteristic pink coloured clear stock solution having an Fe content of 57.3 g/litre (5.73% Fe) and a pH in the region of 1.0. Stock solution in this form has been found to be stable for transportation and storage over prolonged periods of 1 year or more.

Ingestible slug bait was made from undiluted stock solution having an Fe content of 57.3 g/litre (5.73% Fe) and a pH in the region of 1.0. The solution was added to mechanically agitated coconut oil at 35C containing acid tolerant surfactants cetyltrimethylammonium chloride and trioctylmethyl ammonium chloride (Aliquat® 336, Sigma-Aldrich) and methyltriC8-10alkyl ammonium chloride (Adogen® 464, Sigma-Aldrich). This made an stiff liquid water in oil emulsion of approximately 50% aqueous phase by weight. This was formed into a dough with fine milled wheat bran and extruded through 1 mm aperture and allowed to set / solidify by cooling to room temperature giving 1mm diameter tubular pellets with Fe acid disguised in emulsion droplets inside the solidified coconut oil solid phase. Digestive lipase enzymes in the gut release contents.

### Fe content by weight in solid emulsion is 25g / Kg (25mg / g)

Fe content by weight in pellet was 10 mg/g (1%) to provide a preferred effective dose.

## Claims

1. A pesticidal composition comprising a microcapsule comprising a shell and a fill, the fill comprising water and the dissolved reaction product of ferrous sulphate with phosphoric acid followed by addition of an oxidising agent;
wherein the microcapsule shell is coated with an ingestible material.

2. A composition as claimed in claim 1, wherein the oxidising agent is hydrogen peroxide.

3. A composition as claimed in claim 1 or 2, wherein the fill is free from chelating agents.

4. A composition as claimed in any preceding claim, wherein the fill is an aqueous solution having a pH in the range pH 1-7.

5. A composition as claimed in any preceding claim, wherein the fill of each microcapsule, or the combined fill volume of multiple microcapsules to be incorporated into a single slug pellet contains 10-15 mg Fe.

6. A composition as claimed in any preceding claim, wherein the fill comprises 5 wt% Fe.

7. A composition as claimed in any one of claims 1 to 5, wherein the fill comprises 0.3 to 1 wt% Fe.

8. A composition as claimed in any preceding claim, wherein the weight of the uncoated microcapsule or aggregate weight of multiple microcapsules to be incorporated into a single slug pellet is in the range of 0.01 to 0.05 g.

9. A composition as claimed in any preceding claim, wherein the shell has a diameter of 10 microns to 100 microns.

10. A composition as claimed in any preceding claim, wherein the coating is a farinaceous material.

11. A composition as claimed in any preceding claim, wherein the coating material is selected from the group consisting of: starch, pectin, agar, gelatine, guar gum, gum arabinose, cellulose, polysaccharides, proteins, fecula, cellulose complexes, sand, clay, silica, polyacrylic acid polymers, polyacrylimide acid polymers, diatomaceous earth, aliginate and wax, arrowroot, corn starch, katakuri starch, potato starch, sago, tapioca, modified and derivative starches, vegetable gums, guar gum, locust bean gum, xanthan gum, proteins, collagen, egg white, furcellaran, gelatin, carbohydrates and sugars.

## Patentansprüche

1. Pestizidkomposition umfassend eine Mikrokapsel mit einer Hülle und einer Füllung, welche Füllung Wasser und ein gelöstes Reaktionsprodukt aus Eisensulfat mit Phosphorsäure und einem nachträglich zugefügten oxydierenden Wirkstoff, umfasst;
wobei die Mikrokapselhülle mit einem einnehmbaren Material beschichtet ist.

2. Komposition nach Anspruch 1, wobei der oxydierende Wirkstoff Wasserstoffperoxid ist.

3. Komposition nach einem der Anssprüche 1 oder 2, wobei die Füllung frei von Chelatbildnern ist.

4. Komposition nach einem der vorgehenden Ansprüche, wobei die Füllung eine wässrige Lösung mit einem pH-Wert im Bereich von pH 1-7 ist.

5. Komposition nach einem der vorgehenden Ansprüche, wobei die Füllung jeder Mikrokapsel, oder das kombinierte Füllvolumen von mehreren Mikrokapseln, die in ein einzelnes Schneckenkorn eingearbeitet sind, 10-15 mg Fe enthält.

6. Komposition nach einem der vorgehenden Ansprüche, wobei die Füllung 5 Gew.-% Fe umfasst.

7. Komposition nach einem der Ansprüche 1 bis 5, wobei die Füllung 0.3 bis 1 Gew.-% Fe umfasst.

8. Komposition nach einem der vorgehenden Ansprüche, wobei das Gewicht der unbeschichteten Mikrokapsel oder des Gesamtgewichts von mehreren Mikrokapseln, die in ein einzelnes Schneckenkorn eingearbeitet sind, im Bereich von 0.01 bis 0.05 g liegt.

9. Komposition nach einem der vorgehenden Ansprüche, wobei die Hülle einen Durchmesser von 10 µm bis 100 µm aufweist.

10. Komposition nach einem der vorgehenden Ansprüche, wobei die Beschichtung ein mehlhaltiges Material ist.

11. Komposition nach einem der vorgehenden Ansprüche, wobei das Beschichtungsmaterial ausgewählt ist aus der Gruppe bestehend aus: Stärke, Pektin, Agar, Gelatine, Guargummi, Gummi Arabinose, Cellulose, Polysacchariden, Proteinen, Fecula, Cellulosekomplexen, Sand, Ton, Siliciumdioxid, Polyacrylsäurepolymere, Polyacrylimid-Säurepolymere, Diatomeenerde, Alginat und Wachs, Pfeilwurz, Maisstärke, Katakuri-Stärke, Kartoffelstärke, Sago, Tapioka, modifizierte und derivierte Stärken, Pflanzengummis, Guargummi, Johannisbrotkernmehl, Xanthangummi, Proteine, Kollagen, Eiweiß, Furcellaran, Gelatine, Kohlenhydrate und Zucker.

## Revendications

1. Composition pesticide comprenant une microcapsule comprenant une coque et un remplissage, le remplissage comprenant de l'eau et le produit dissout de la réaction entre du sulfate ferreux et de l'acide phosphorique suivie de l'ajout d'un agent oxydant ;
selon laquelle la coque de la microcapsule est enrobée d'un produit comestible.

2. Composition selon la revendication 1, selon laquelle l'agent oxydant est du peroxyde d'hydrogène.

3. Composition selon la revendication 1 ou la revendication 2, selon laquelle le remplissage est libre d'agents chélateurs.

4. Composition selon l'une quelconque des revendications précédentes, selon laquelle le remplissage est une solution aqueuse présentant un pH dans la fourchette de pH1 à pH7.

5. Composition selon l'une quelconque des revendications précédentes, selon laquelle le remplissage de chaque microcapsule, ou le volume combiné de remplissage de plusieurs microcapsules devant être incorporées dans un seul granulé anti-limace contenant de 10 mg à 15 mg de fer.

6. Composition selon l'une quelconque des revendications précédentes, selon laquelle le remplissage comprend 5 % en poids de fer.

7. Composition selon l'une quelconque des revendications 1 à 5 précédentes, selon laquelle le remplissage comprend de 0,3 % à 1 % de fer.

8. Composition selon l'une quelconque des revendications précédentes, selon laquelle le poids de la microcapsule non-enrobée ou le poids cumulé de plusieurs microcapsules devant être incorporées dans un granulé anti-limace se situe dans la fourchette de 0,01 g à 0,05 g.

9. Composition selon l'une quelconque des revendications précédentes, selon laquelle la coque présente un diamètre de 10 microns à 100 microns.

10. Composition selon l'une quelconque des revendications précédentes, selon laquelle l'enrobage est un matériau fariné.

11. Composition selon l'une quelconque des revendications précédentes, selon laquelle le matériau d'enrobage est choisi dans le groupe consistant en : l'amidon, la pectine, l'agar, la gélatine, la gomme guar, la gomme arabique, la cellulose, les polysaccharides, les protéines, les féculants, les complexes de cellulose, le sable, l'argile, la silice, les polymères d'acide polyacrylique, les polymères d'acide polyacrylimide, la terre de diatomées, l'alginate, et la cire, la marante, l'amidon de maïs, l'amidon de katakuri, l'amidon de pomme de terre, le sagou, le tapioca, les amidons dérivés et modifiés, les gommes végétales, la gomme guar, la gomme adragante, la gomme de caroube, les protéines, le collagène, le blanc d'oeuf, le furcellaran, la gélatine, les glucides, et les sucres.
